(19) Europäisches Patentamt / European Patent Office / Office européen des brevets

(11) **EP 3 301 473 B1**

(12) **EUROPEAN PATENT SPECIFICATION**

(45) Date of publication and mention
of the grant of the patent:
**25.08.2021 Bulletin 2021/34**

(51) Int Cl.:
*G01S 7/484* (2006.01)

(21) Application number: **17189542.8**

(22) Date of filing: **06.09.2017**

(54) **DISTANCE MEASURING DEVICE**

ENTFERNUNGSMESSVORRICHTUNG

DISPOSITIF DE MESURE DE DISTANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.09.2016 JP 2016189547**

(43) Date of publication of application:
**04.04.2018 Bulletin 2018/14**

(73) Proprietor: **Topcon Corporation
Tokyo 174-8580 (JP)**

(72) Inventors:
• **MORITA, Hideki
Tokyo 174-8580 (JP)**
• **YOSHINO, Ken'ichiro
Tokyo 174-8580 (JP)**

(74) Representative: **Eisenführ Speiser
Patentanwälte Rechtsanwälte PartGmbB
Postfach 31 02 60
80102 München (DE)**

(56) References cited:
**US-A- 5 815 251      US-A1- 2014 211 192**

• Analog Devices: "PRINTER CIRCUIT BOARD
ISSUES CHAPTER 12: PRINTED CIRCUIT BOARD
(PCB) DESIGN ISSUES", Linear Circuit Design
Handbook, The Engineering Staff Of Analog
Devices, 31 December 2008 (2008-12-31),
XP055682702, Oxford ISBN: 978-0-7506-8703-4
Retrieved from the Internet:
URL:https://www.analog.com/media/en/traini
ng-seminars/design-handbooks/Basic-Linear-
Design/Chapter12.pdf [retrieved on 2020-04-03]

EP 3 301 473 B1

**Description**

BACKGROUND OF THE INVENTION

Technical Field

The present invention relates to a circuit for emitting pulsed light.

Background Art

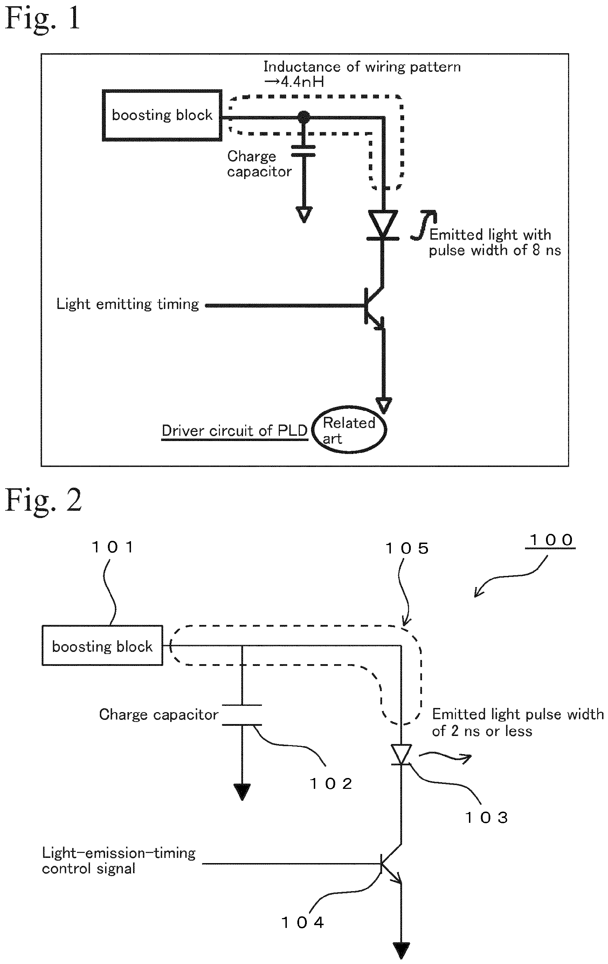

Distance measuring devices using pulses of light are publicly known. Fig. 1 shows a circuit of a light emitting part for measuring a distance using pulses of light (refer to Japanese Unexamined Patent Application Laid-Open No. 2010-139295). This type of circuit typically emits light with a pulse width of approximately 10 ns. A distance measuring device using this circuit tends to have laser interference due to unnecessary internal reflection in its main structure, thereby increasing deviation of distance measurement values. For this reason, an optical mechanism should be provided to the main structure to avoid the interference, resulting in increase in production cost of the main structure and hindering size reduction.

Making light with a pulse width of 2 ns or less be emitted prevents the laser interference and enables distance measurement with high accuracy, without using the optical mechanism for avoiding the laser interference. This method provides distance measuring with high accuracy and enables an inexpensive product configuration by reducing the size of the main structure and reducing the number of parts (refer to Japanese Patent No. 3169082).

US 2014/0211192 A1 describes an electronic driver circuit for LEDs and LASERs which is provided for use in time-of-flight applications featuring a high efficiency of energy-conversion and a high precision of distance-measurements based on a dual conversion circuit. A voltage to voltage DC-DC conversion is hereby merged with a DC-voltage to pulsed-current booster, tins booster operating at a time-of-flight modulation frequency. At the start of a new measurement cycle, the PWM signal for driving the DC-DC conversion is updated in response to currents observed during previous illumination periods.

US 5,815,251 describes a device for measuring distance with a visible measuring beam generated by a semiconductor laser, a collimator object lens to collimate the measuring beam towards the optical axis of the collimator object lens, a radiation arrangement to modulate the measuring radiation, a reception object lens to receive and image the measuring beam reflected from a distant object on a receiver, a switchable beam deflection device to generate an internal reference path between the semiconductor laser and the receiver and an electronic evaluation device to find and display the distance measured from the object. The receiver contains a light guide with a downstream optoelectronic transducer, in which the light guide inlet surface is arranged in the imaging plane of the reception object lens for long distances from the object and can be controllably moved from this position transversely to the optical axis. Alternatively, the light inlet surface is fixed and there are optical means outside the optical axis of the reception object lens which, for short object distances, deflect the imaging position of the measuring beam to the optical axis of the reception object lens. The measuring radiation is pulse modulated with excitation pulses with a pulse width of less than two nanoseconds.

SUMMARY OF THE INVENTION

When an attempt is made to emit pulsed light with a pulse width of 2 ns or less using the circuit shown in Fig. 1, frequency characteristics are deteriorated due to the effect of inductance of a wiring pattern of the circuit, and it is difficult to emit pulsed light with the pulse width of 2 ns or less. An object of the present invention is to provide a technique for enabling emission of pulsed light with a pulse width of 2 ns or less and to reduce an attenuation value of the pulsed light to be not greater than 3dB.

A first aspect of the present invention provides a circuit configured to emit pulsed light, and the circuit includes a voltage generating circuit, a light emitting element that emits pulsed light, a circuit wiring that connects the voltage generating circuit and the light emitting element, wherein the circuit wiring includes a PCB wiring pattern having a pattern length "L", a pattern width "W", a pattern thickness "H", and an inductance component that is calculated as follows: $0.0002L[(\log(2 \times L)/(W+H))+0.2235((W+H)/L)+0.5]$ ($\mu$H); a charge capacitor with its end connected to the circuit wiring, and a switching element configured to be turned on or off to apply voltage to the light emitting element. The inductance component of the circuit wiring is not greater than 1.4 nH to reduce an attenuation value of the pulsed light with a pulse width of 2 ns from the light emitting element to be not greater than 3 dB.

The present invention provides a circuit according to claim 1 for enabling emission of pulsed light with a pulse width of 2 ns or less and to reduce an attenuation value of the pulsed light to be not greater than 3dB.

BRIEF DESCRIPTION OF DRAWINGS

Fig. 1 is a circuit diagram of a conventional art.
Fig. 2 is a circuit diagram using the present invention.
Fig. 3 is a graph showing a relationship between frequency and attenuation value in each wiring having a different inductance.

PREFERRED EMBODIMENTS OF THE INVENTION

Structure

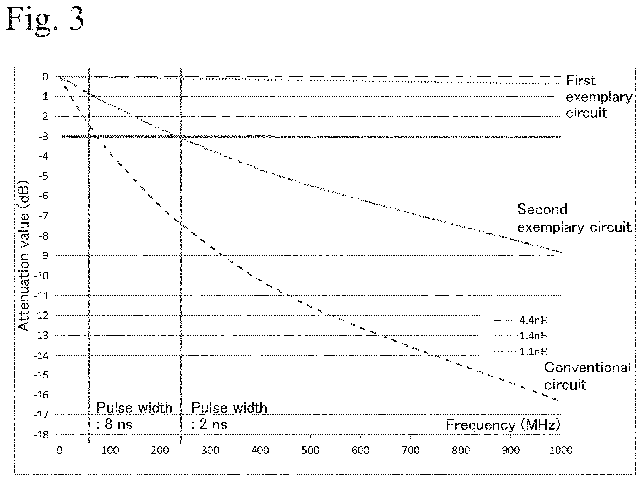

Fig. 2 shows a light emitting circuit 100 using the present invention. The light emitting circuit 100 includes a boosting block 101 serving as a power source, a charge capacitor 102, a laser diode 103 serving as a light emitting element, and a switching element 104. The charge capacitor 102 stores electric charges by supplying voltage from the boosting block 101. In this condition, the switching element 104 is turned on to let the electric charges, which are stored in the charge capacitor 102, instantly flow in the laser diode 103, thereby allowing the laser diode 103 to emit pulsed light.
The inductance of a wiring 105 extending to the laser diode 103 greatly affects the pulse width of the emitted light. Fig. 3 shows a relationship between a frequency (corresponding to a pulse width) and an attenuation value in each wiring having a different inductance. As clearly shown in Fig. 3, setting the inductance of the wiring 105 at not greater than 1.4 nH reduces the attenuation of light with a pulse width of 2 ns to be not greater than 3 dB, thereby enabling emission of light with a pulse width of 2 ns.
Hereinafter, a specific example of making the wiring 105 having an inductance of not greater than 1.4 nH will be described. In general, an inductance component ($\mu$H) of a PCB wiring pattern is calculated by the following approximation formula. Here, the symbol "L" represents a pattern length, the symbol "W" represents a pattern width, and the symbol "H" represents a pattern thickness.

First Formula

$$\text{Inductance component} = 0.0002\text{L} \left[ \left( \log\ (2 \times \text{L})\ /(\text{W}+\text{H}) \right)\ + 0.2235((\text{W}+\text{H})/\text{L}) + 0.5 \right] (\mu\text{H})$$

A conventional pattern typically has a length "L" of approximately 7 mm, a width "W" of approximately 1 mm, and a thickness "H" of approximately 18 $\mu$m, and the inductance of a conventional wiring corresponding to the wiring 105 is approximately 4.4 nH. In this embodiment, for example, the wiring 105 has a width "W" of 1 mm and a thickness "H" of 18 $\mu$m. To set the inductance to be not greater than 1.4 nH, the wiring 105 of this embodiment must have a length "L" of 3 mm or less.
As described above, the light emitting circuit 100 is configured to emit pulsed light and includes the boosting block 101 serving as a voltage generating circuit, the laser diode 103 serving as a light emitting element, the wiring 105, the charge capacitor 102 with its end connected to the wiring 105, and the switching element 104 configured to be turned on or off to apply the voltage to the laser diode 103.
The wiring 105 has an inductance of not greater than 1.4 nH. The laser diode 103 emits pulsed light with a pulse width of 2 ns or less. Setting the inductance of the wiring 105 at not greater than 1.4 nH reduces the attenuation value of light with a pulse width of 2 ns or less to be not greater than 3 dB, thereby enabling emission of light with a pulse width of 2 ns or less.

**Claims**

1. A circuit (100) configured to emit pulsed light, comprising:

a voltage generating circuit (101);
a light emitting element (103) that emits pulsed light;
a circuit wiring (105) that connects the voltage generating circuit (101) and the light emitting element (103),
wherein the circuit wiring (105) includes a PCB wiring pattern having a pattern length "L", a pattern width "W", a pattern thickness "H", and an inductance component that is calculated as follows:

$$0.0002L[(\log(2\times L)/(W+H))+0.2235((W+H)/L)+0.5]\ (\mu H);$$

a charge capacitor (102) with its end connected to the circuit wiring (105); and
a switching element (104) configured to be turned on or off to apply voltage to the light emitting element (103),
**characterized in that**
the inductance component of the circuit wiring (105) is not greater than 1.4 nH to reduce an attenuation value of the pulsed light with a pulse width of 2 ns from the light emitting element (103) to be not greater than 3dB.

**Patentansprüche**

1. Schaltung (100), die zum Emittieren von gepulstem Licht konfiguriert ist, umfassend:

eine spannungserzeugende Schaltung (101);
ein lichtemittierendes Element (103), das gepulstes Licht emittiert;
eine Schaltungsverdrahtung (105), die die spannungserzeugende Schaltung (101) und das lichtemittierende Element (103) verbindet, wobei die Schaltungsverdrahtung (105) ein Leiterplatten-Verdrahtungsmuster mit einer Musterlänge "L", einer Musterbreite "W", einer Musterdicke "H", und einer Induktivitätskomponente enthält, die wie folgt berechnet wird:

$$0{,}0002L[(\log(2\times L)/(W+H))+0{,}2235((W+H)/L)+0{,}5]\ (\mu H);$$

einen Ladekondensator (102), dessen Ende mit der Schaltungsverdrahtung (105) verbunden ist; und
ein Schaltelement (104), das konfiguriert ist, um ein- oder ausgeschaltet zu werden, um eine Spannung an das lichtemittierende Element (103) anzulegen,
**dadurch gekennzeichnet, dass**
die Induktivitätskomponente der Schaltungsverdrahtung (105) nicht größer als 1,4 nH ist, um einen Dämpfungswert des gepulsten Lichts mit einer Impulsbreite von 2 ns von dem lichtemittierenden Element (103) auf nicht mehr als 3 dB zu reduzieren.

**Revendications**

1. Circuit (100) configuré pour émettre de la lumière puisée, comprenant:

un circuit générateur de tension (101);
un élément émetteur de lumière (103) qui émet de la lumière puisée;
un câblage de circuit (105) qui connecte le circuit générateur de tension (101) et l'élément émetteur de lumière (103), dans lequel le câblage de circuit (105) comprend un motif de câblage de circuit imprimé ayant une longueur de motif "L", une largeur de motif "W", une épaisseur de motif "H" et un composant d'inductance qui est calculé comme suit:

$$0{,}0002L[(\log(2\times L)/(W+H))+0{,}2235((W+H)/L)+0{,}5]\ (\mu H);$$

un condensateur de charge (102) dont l'extrémité est connectée au câblage de circuit (105); et
un élément de commutation (104) qui est configuré pour être activé ou désactivé pour appliquer une tension à l'élément émetteur de lumière (103),
**caractérisé par le fait que**
le composant d'inductance du câblage de circuit (105) n'est pas supérieure à 1,4 nH pour réduire une valeur d'atténuation de la lumière pulsée avec une largeur d'impulsion de 2 ns, provenant de l'élément émetteur de lumière (103), de manière à ne pas être supérieure à 3 dB.

# Fig. 1

Inductance of wiring pattern
→4.4nH

boosting block

Charge capacitor

Emitted light with pulse width of 8 ns

Light emitting timing

Driver circuit of PLD  Related art

# Fig. 2

101

105

100

boosting block

Charge capacitor

102

Emitted light pulse width of 2 ns or less

103

Light-emission-timing control signal

104

# Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010139295 A
- JP 3169082 B
- US 20140211192 A1
- US 5815251 A